Europäisches Patentamt

European Patent Office

Office européen des brevets

(11) Veröffentlichungsnummer: **0 309 984**
**A2**

## (12) EUROPÄISCHE PATENTANMELDUNG

(21) Anmeldenummer: **88115874.5**

(22) Anmeldetag: **27.09.88**

(51) Int. Cl.⁴: **H04N 7/167**

(30) Priorität: **30.09.87 DE 3733473**

(43) Veröffentlichungstag der Anmeldung:
**05.04.89 Patentblatt 89/14**

(84) Benannte Vertragsstaaten:
**AT BE CH DE ES FR GB GR IT LI LU NL SE**

(71) Anmelder: **Deutsche Thomson-Brandt GmbH**
**Hermann-Schwer-Strasse 3 Postfach 1307**
**D-7730 Villingen-Schwenningen(DE)**

(72) Erfinder: **Perdrieau, Laurent**
**5, rue Chateaubriand**
**F-670400 Illkirch(FR)**

(74) Vertreter: **Körner, Peter, Dipl.-Ing.**
**Deutsche Thomson-Brandt GmbH Patent-**
**und Lizenzabteilung Göttinger Chaussee 76**
**D-3000 Hannover 91(DE)**

(54) **Verschachtelung eines Videosignals.**

(57) 2.1 Es sind Verschachtelungsschemata bekannt, die durch einfache Maßnahmen den Empfang eines Originalbildes durch Nichtberechtigte verhindern. Diese Verschachtelungsschemata haben jedoch eine große Korrelation, die es durch einfache Maßnahmen erlaubt, das Videosignal von nicht autorisierten Empfängern lagerichtig wiederzugeben.

2.2 Um eine Korrelation zu erzielen, die gegen Null geht, wird das Videosignal einer Zeile paketweise innerhalb dieser Zeile verschachtelt, die Lage der Zeilen in einem Halbbild vertauscht, und die Halbbilder oder Vollbilder innerhalb mehrerer Halbbilder oder Vollbilder vertauscht.

2.3 Anwendung findet die Erfindung bei geschützten Rundfunkübertragungen

EP 0 309 984 A2

## Verschachtelung eines Videosignals

Die Anmeldung betrifft eine Verschachtelung eines Videosignals für Münzfernsehen oder geschützte Rundfunkübertragung, sowie für alle Anwendungen, wo eine nicht standardisierte zeitliche Übertragung eines Videosignals erfolgt.

Für den unbefugten Empfang eines Videosignals sind heute unterschiedliche Verschachtelungsmethoden bekannt, wie z.B.:

1. Polaritätsvertauschung des Videosignals.

2. Unterdrückung des Synchronimpulses und Ersetzen durch einen Trigger.

3. Verschieben des Videosignals von einer Zeile zur anderen.

4. Vertauschen von ein oder zwei Blöcken in einer Zeile.

Der Schutz, der mit Hilfe solcher Verfahren erzielt wird, ist jedoch durch einfach Korrelationsverfahren umgehbar.

Der Erfindung liegt die Aufgabe zugrunde, ein Verfahren sowie eine Schaltungsanordnung für eine Verschachtelungsmethode für ein Videosignal anzugeben, mit dem eine gegen Null gehende Korrelation erzielt wird.

Die Erfindung wird durch die im Patentanspruch 1 und 6 angegebenen Maßnahmen gelöst. Vorteilhafte Weiterbildungen der Erfindung sind in den Unteransprüchen beschrieben.

Es wird vorgeschlagen, das Videosignal in jeder Zeile in Pakete aufzuteilen und diese in der Zeile zu verschachteln und die Lage dieser Pakete in einem Halbbild oder in einem Vollbild mittels einer zweiten Zufallsverteilung fest zu legen. Die für die Verschachtelung der Informationen in Pakete aufgeteilte Zeile kann zusätzlich noch in Blöcke aufgeteilt wer den, so daß jedes Paket einer Zeile aus einer Anzahl von Blöcken bestehen kann, die zusätzlich noch innerhalb der Pakete verschachtelt werden können. Die zeitliche Lage dieser Pakete wird durch einen ersten Pseudozufallsgenerator bestimmt, durch dessen Vorprogrammieren das Videosignal in der Zeile verschachtelt wird. Bei der Verschachtelung werden die Leerzeilen nicht verwendet. Die Zeilen, die eine Bildinformation enthalten, werden in einen Halbbildspeicher eingeschrieben, wobei die Lage in diesem Halbbildspeicher durch einen zweiten Zufallsgenerator bestimmt wird. Anstelle eines Halbbildspeichers können auch Vollbildspeicher verwendet werden. In dem Fall, in dem ein höherer Grad der Verschachtelung notwendig ist, können mehreren Halbbild- oder Vollbildspeicher verwendet werden, wobei dann die Verschachtelung der Blöcke in der Zeile, der Zeilen in Zeilenblöcken und der Zeilenblöcke in zusammengefaßten Halbbild- oder Vollbildspeicher geschieht.

Durch diese Verschachtelung der Pakete einerseits in der Zeile, andererseits zwischen den Zeilen wird ein sehr geringer Korrelationgrad zwischen den Zeilen erzielt. Durch die paketweise Organisation einer Zeile und die Verschachtelung durch den ersten Zufallsgenerator ändert die Korrelation von einem Block zu einem nächsten.

Nachstehend wird ein Ausführungsbeispiel an Hand der Zeichnung erläutert. Es zeigen:

Fig.1 den Aufbau eines Halbbildspeichers und die räumliche Lage der Blöcke und

Fig. 2 eine Verschachtelungsanordnung.

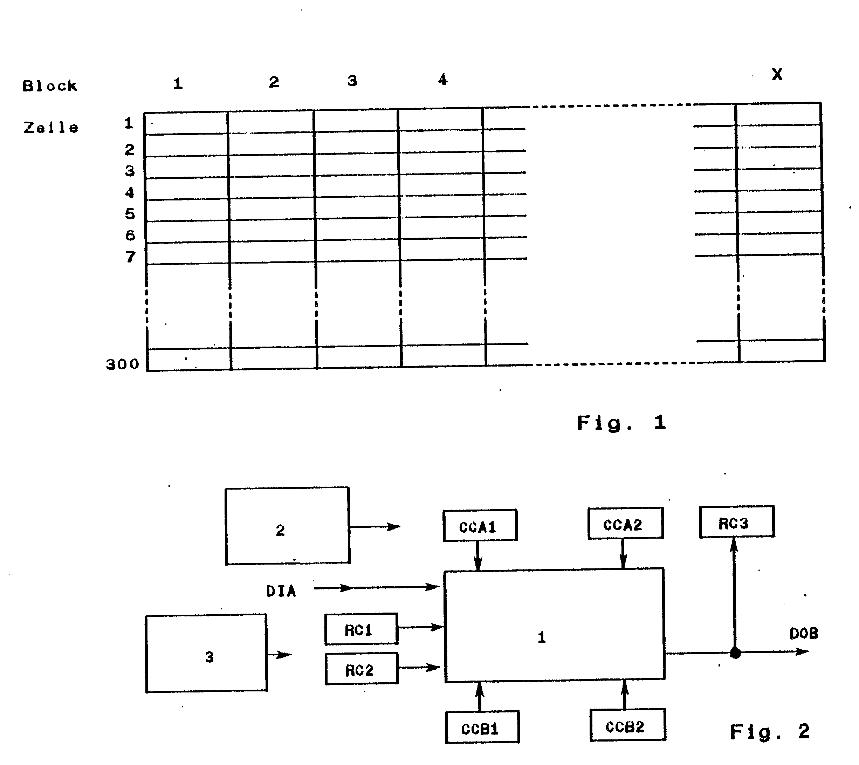

Fig. 1 zeigt die Struktur eines Halbbildspeichers und die örtliche Lage der einzelnen Blöcke, wobei ein Halbbildspeicher in Zeilen 1 - 300 und Spalten 1 - 64 aufgeteilt ist. Bei der zeilenweise Verschachtelung werden jeweils Blöcke einer Zeile zu einem Paket zusammengefaßt, welches an jede beliebige Stelle des Halbbildspeichers geschrieben werden kann, wobei die horizontale Lage durch den ersten Pseudozufallsgenerator berechnet und die vertikale Lage durch den zweiten Pseudozufallsgenerator wird. Eine Zeile ist in 8 Pakete mit 8 Blöcken mit je 12 Abtastwerten, also 96 Abtastwerte aufgeteilt.

Fig. 2 zeigt eine Verschachtelungsanordnung. Abwechselnd werden die ankommenden Videoabtastwerte über den Eingang DIA in den Halbbildspeicher 1 eingeschrieben, wobei die Lage in diesem Halbbildspeicher durch die Zeilenzähler RC1, RC2 und Spaltenzähler CCA1 und CCA2 bestimmt werden. Jeweils 1 Paar RC1, CCA1 bzw. RC2, CCA2, ist für die Bestimmung der Adresse im Halbbildspeicher erforderlich. Jeweils ein Paar RC1, CCA1 bzw. RC2, CCA2 werden durch die Pseudozufallsgeneratoren 2, 3 vorprogrammiert, während das andere Paar RC2, CCA2 bzw. RC1, CCA1 für eine festgelegte Zeitdauer die Speicherungssteuerung und Schreibvorgang ausführt. Das andere Paar Adressenzähler, welche augenblicklich nicht verwendet wird, wird für den nächsten Schreibvorgang vorprogrammiert. Die Vorprogrammierung der Zeilen- und Spaltenzählern geschieht durch Rücksetzen der Zähler. Das Rücksetzen des Zählers geschieht innerhalb des Schreibvorganges der anderen Paares der Zeilen- und Spaltenzähler, und zwar x Takte, bevor dieses Paar den Schreibvorgang übernimmt. Der Zeitpunkt der Rücksetzung gekennzeichnet durch die x Takte, wird von den Pseudozufallsgeneratoren bestimmt. Gelesen wird der Halbbildspeicher 1 durch die Adressenzähler RC3/CCB1, und zwar in der üblichen normalen aufsteigenden Reihenfolge. Für die Programmierung der nichtbenutzten horizontalen Zähler CCAX, steht eine Zeitdauer von 64 Grundzyklen zur Verfügung. Für diese 8 Pakete gibt es in einer Zeile also 8 verschiedene Anordnungsmöglichkeiten. Nach Ablauf dieser 8 Zyklen werden die horizontalen Zähler CCA1/CCA2 vertauscht.

Für beispielsweise vier aufeinanderfolgende Zeilen ist ein Zeilenzähler RCl/RC2 zuständig. Während dieses Schreibvorganges der vier Zeilen, deren Adressen in einem der Zähler RC1, RC2 festgelegt sind, wird für die nächsten vier Zeilen der nicht benötigte Zeilenzähler RC2 bzw. RC1 durch einen Pseudozufallsgenerator 3 vorprogrammiert.

Für eine erweiterte Verschachtelung ist es vorteilhaft, mehrere Halbbild- oder Vollbildspeicher zu verwenden, die durch einen dritten Pseudozufallsgenerator so ausgewählt werden, daß für jeden Block einer Zeile, wobei mehrere Zeilen zusammengefaßt werden können zu einem Zeilenblock, ein unterschiedlicher Halbbild- oder Vollbildspeicher verwendet werden kann. Bei einer solchen Verschachtelungsanordnung wird ein weiteres Steuerelement benötigt, nämlich ein Halbbild-oder Vollbildzähler, welches durch den dritten Pseudozufallsgenerator vorprogrammiert wird, z.B. in entsprechender Weise durch Rücksetzen und Zählen eines Taktes. Dabei entspricht dann, wie bei den vorherigen Zählern, der Zählerstand bei der Übergabe für den Schreibvorgang der aktuellen vorprogrammierten Speicheradresse.

Für das Auslesen dieser Halbbild- oder Vollbildspeicher werden diese in der normalen Anordnung ausgelesen und zwar in der aufsteigenden Reihenfolge. Die damit erreichte Verzögerung entspricht der Anzahl der verwendeten Halbbildspeicher. Mit dieser Verschachtelungseinrichtung kann ein Block einer Zeile in einen der verschiedenen Halbbildspeicher an eine der 8 Zeilenlagen und in einer von vier Zeilengruppen gespeichert werden. Durch diese Anordnung ist die Anzahl der verschiedenen Lagen der Blöcke einer Zeile sehr groß und die Korrelation der Signale zwischen den einzelnen Blöcken geht gegen Null.

Nachdem die Signale in die Halbbildspeicher mit Hilfe des vorherbeschriebenen Prozesses eingeschrieben worden sind, stellen die Ausgangsdaten ein normalen Videosignal dar. Synchronsignal sowie Leerzeilen werden dem ausgelesenem Signal nach dem Verschachteln hinzugefügt, um ein vollständiges Videosignal zu ergeben und, um den Empfänger zu synchronisieren und die Pseudozufallsgeneratoren im Empfänger zu initialisieren.

Für den Entschachtelungsprozeß wird derselbe Prozeß wie im Sender in umgekehrter Reihenfolge durchlaufen. Es sind keine weiteren Komponenten erforderlich. Durch den hohen Verschachtelungsgrad werden einfache Korrelationsverfahren und somit ein unauthorisiertes Entschachteln verhindert.

## Ansprüche

1. Verfahren zur Verschachtelung der Information eines in Zeilen und Halb- oder Vollbildern aufgebauten Videosignals, **dadurch gekennzeichnet**, daß jede Zeile in Pakete mit jeweils einer Anzahl von Blöcken aufgeteilt sind und, daß diese Pakete mittels einer ersten Pseudozufallsverteilung in der Zeile verschachtelt werden.

2. Verfahren nach Anspruch 1, **dadurch gekennzeichnet**, daß die Zeilen eines Halbbildes oder Vollbildes mittels einer Pseudozufallsverteilung in dem Halbbild oder Vollbild verschachtelt werden.

3. Verfahren nach Anspruch 2, **dadurch gekennzeichnet**, daß je eine Anzahl von Zeilen, die kleiner sind als die Gesamtzahl der Zeilen eines Halbbildes oder Vollbildes, zusammengefaßt und mittels der zweiten Pseudozufallsverteilung untereinander verschachtelt werden.

4. Verfahren nach einem der Ansprüche 1 bis 3, **dadurch gekennzeichnet**, daß durch eine dritte Pseudozufallsverteilung die Pakete einer Zeile in mehreren aufeinanderfolgenden Halbbilder oder Vollbilder verschachtelt werden.

5. Verfahren nach Anspruch 1 oder 4, **dadurch gekennzeichnet**, daß nur solche Zeilen der Pseudozufallsverteilung unterworfen werden, die Videosignalinformationen enthalten.

6. Schaltungsanordnung zur Durchführung des Verfahrens zur Verschachtelung der Information eines in Zeilen und Halb- oder Vollbildern aufgebauten Videosignals, **dadurch gekennzeichnet**, daß die Videoabtastwerte in einem Halbbild- oder Vollbildspeicher (1) blockweise eingeschrieben werden, daß die Adressierung für den Schreibvorgang durch Zeilenzähler (RC1, RC2) und Spaltenzähler (CCA1, CCA2) geschieht und daß die Zeilenzähler (RC1. RC2) und Spaltenzähler (CCA1, CCA2) durch Pseudozufallsgeneratoren .(2, 3) vorprogrammiert werden.

7. Schaltungsanordnung nach Anspruch 6, **dadurch gekennzeichnet**, daß die Zeilen- (RC1, RC2) und Spaltenzähler (CCA1, CCA2) paarweise zusammengefaßt sind, daß das erste Paar der Zeilen- (RC1) und Spaltenzähler (CCA1) den Schreibvorgang steuert und das zweite Paar der Zeilen- (RC2) und Spaltenzähler (CCA2) durch die Pseudozufallsgeneratoren (2, 3) für die von diesem Paar der Zeilen- (RC2) und Spaltenzähler (CCA2) durchzuführenden, sich anschließenden Schreibvorgang zeilen- und spaltenweise vorprogrammiert wird.

8. Schaltungsanordnung nach Anspruch 7, **dadurch gekennzeichnet**, daß nach Abschluß des ersten Schreibvorganges des ersten Paares der Zeilen- (RC1) und

Spaltenzähler (CCA1) das andere Paar der Zeilen- (RC2) und Spaltenzähler (CCA2) für die folgenden Zeilen den Schreibvorgang durchführt und das erste Paar während dieses Schreibvorganges von den

Pseudozufallsgeneratoren (2, 3) für den nächsten ihm zugeordneten Schreibvorgang vorprogrammiert wird.

9. Schaltungsanordnung nach einem der Ansprüch 5 bis 8, **dadurch gekennzeichnet**, daß der Speicher (1) in aufsteigender Reihenfolge ausgelesen und zur Erzeugung eines vollständigen Videosignals dem ausgelesenen Halbbild oder Vollbild entsprechende Leerzeilen sowie Synchronsignale vorangestellt wird.

10. Schaltungsanordnung nach Anspruch 5, **dadurch gekennzeichnet**, daß mehrere Halbbild- oder Vollbildspeicher mit je einer zugehörigen Schreib-Lesesteuereinheit vorgesehen sind, und daß ein dritter Pseudozufallsgenerator die Schreib-Lesesteuereinheiten vorprogrammiert, um eine Verschachtelung der Blöcke einer Zeile in unterschiedlichen Halbbild- oder Vollbildspeichern zu erzielen.

EP 0 309 984 A2

Block    1      2      3      4                     X

Zelle     1
          2
          3
          4
          5
          6
          7

300

**Fig. 1**

2

CCA1      CCA2      RC3

DIA

3      RC1      1      DOB

RC2

CCB1      CCB2      **Fig. 2**

H 87/080